# EUROPÄISCHE PATENTSCHRIFT

(11) **EP 0 868 606 B1**
(45) Veröffentlichungstag und Bekanntmachung des Hinweises auf die Patenterteilung: **05.01.2000**
(21) Anmeldenummer: 96939852.8
(22) Anmeldetag: 20.11.1996
(51) Int. Cl.: F02M 35/024, B01D 46/24

(54) **LUFTFILTERELEMENT**
AIR FILTER ELEMENT
ELEMENT DE FILTRE A AIR

(30) Priorität: 20.12.1995 DE 19547575
(43) Veröffentlichungstag der Anmeldung: 07.10.1998
(73) Patentinhaber: FILTERWERK MANN & HUMMEL GmbH, 71631 Ludwigsburg (DE)
(72) Erfinder: MÖSSINGER, Klaus, D-74185 Obersulm II (DE); WITTEL, Ulrich, D-71686 Remseck (DE); ERDMANNSDÖRFER, Hans, D-75335 Dobel (DE)
(74) Vertreter: Voth, Gerhard, Dipl.-Ing.
(86) Internationale Anmeldenummer: EP9605103
(87) Internationale Veröffentlichungsnummer: WO9722795

(56) Entgegenhaltungen:
- EP-A- 0 650 751
- WO-A-79/00978
- WO-A-95/19832
- WO-A-95/30829
- FR-A- 1 394 828
- FR-A- 2 445 165
- GB-A- 1 253 354
- GB-A- 1 550 831
- US-A- 4 303 426
- US-A- 4 950 317
- US-A- 5 207 811

## Beschreibung

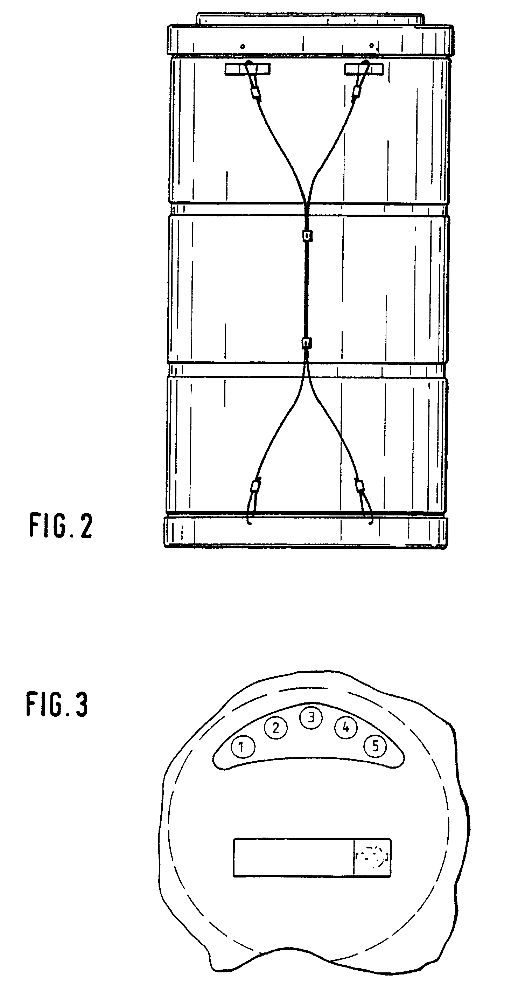

Die Erfindung betrifft ein Luftfilterelement, insbesondere für die Reinigung für Verbrennungsluft für Verbrennungskraftmaschinen gemäß der Gattung des Patentanspruches 1. Derartige Luftfilterelemente sind zum Beispiel aus der US 4 950 317 bekannt. Dieses Luftfilterelement ist im wesentlichen zylindrisch ausgeführt und besitzt ein luftdurchlässiges Gehäuse (vergleiche Figur 3). Die Gehäusewandung ist als Rohlufteinlaß ausgeführt und es ist ein Reinluftauslaß, der konzentrisch ist, an einer der Stirnseiten des zylinderförmigen Gehäuses angebracht. Ein Filtereinsatz ist auf ein luftdurchlässiges Mittelrohr gesteckt, welches mit dem Reinluftauslaß kommuniziert. Auf dem Mittelrohr befindet sich der Filtereinsatz, wobei Reinluftseite und Rohluftseite durch Axialdichtungen im Bereich der Endscheiben des Filtereinsatzes voneinander getrennt sind.

Durch die oben beschriebene Ausführungsform werden bei auftretenden Maßabweichungen der Gehäuseteile beziehungsweise des Filtereinsatzes die axialen Dichtflächen nicht genügend oder gar nicht aufeinander gepreßt. Die Folge ist eine Undichtigkeit des Filters zwischen Rohseite und Reinseite, wodurch mit Schmutzpartikeln kontaminierte Luft in die Reinseite des Filters gelangen kann. Dem ist nur durch eine hohe Fertigungsgenauigkeit zu begegnen, was die Fertigung des Filters in nachteilhafter Weise verteuert.

Aus der GB 1 253 354 ist ein Filter bekannt, welcher einen Filtereinsatz aufweist, der mit Endscheiben versehen ist. Von diesen Endscheiben kann eine als geschlossene Endscheibe ausgeführt sein. Beide Endscheiben weisen Lippen auf, die zu einer zuverlässigen Abdichtung auch bei einer axialen Maßabweichung der einzelnen Bauteile führen. Das Vorsehen einer geschlossenen Endscheibe verringert die Probleme bei der Dichtung zusätzlich, da auf dieser Seite der Patrone eine vollständige Abdichtung zum Gehäuse hin nicht notwendig ist.

Die beschriebene Filterapparatur weist jedoch einen komplizierten Aufbau auf. Dieser verteuert die Gesamtkosten der Apparatur. Andererseits ist der beschriebene Filtereinsatz mit einer verschlossenen Endscheibe nicht ohne weiteres in ein Filtergehäuse gemäß der US 4 950 317 einzubauen, da dies die Teilung der beiden Gehäuseschalen nicht zuläßt.

Aufgabe der Erfindung ist es daher, ein Filter zu schaffen, in dem eine Filterpatrone zur Anwendung kommt, die einseitig durch einen Endscheibe verschlossen ist, und in ein Gehäuse eingebaut werden kann, welches einfach im Aufbau und kostengünstig in der Herstellung ist. Diese Aufgabe wird durch die Merkmale des Patentanspruches 1 gelöst.

Der erfindungsgemäße Filter besitzt ein zylindrisches Gehäuse, welches luftdurchlässig ist, wobei dieses einen Rohlufteinlaß und einen Reinluftauslaß aufweist. Der Reinluftauslaß ist im wesentlichen konzentrisch auf einer der Stirnseiten des zylinderförmigen Gehäuses angeordnet. Der Rohlufteinlaß erfolgt über die luftdurchlässige Mantelfläche des Gehäuses, wobei sich im Inneren des Gehäuses ein luftdurchlässiges Mittelrohr befindet, welches mit dem Reinluftauslaß kommuniziert. Über das Mittelrohr ist eine im wesentlichen metallfreie Filterpatrone geschoben, die die Reinluft- von der Rohluftseite trennt. Die dem Reinluftauslaß gegenüberliegende Stirnseite der Filterpatrone ist verschlossen ausgeführt und weist Toleranzlippen auf. Die Reinluftauslaßseite des Gehäuses weist stirnseitig eine Axialdichtung auf, durch die die Dichtung zwischen Rohseite und Reinseite zustande kommt.

Eine derart gestaltete Filterpatrone ist bezüglich einer vollständigen Abdichtung zwischen Roh- und Reinseite unempfindlich gegenüber Axialtoleranzen, die bei der Herstellung der Patrone oder des Filtergehäuses auftreten können. Gleichzeitig vermindert die einseitig geschlossene Filterpatrone die insgesamt notwendige Dichtfläche. Die Toleranzlippen müssen daher nicht als Dichtung ausgeführt sein, wodurch eine freie geometrische Gestaltung dieser Bauteile möglich ist. Diese können also der Aufgabe des Axialausgleiches optimal angepaßt werden.

Eine vorteilhafte Weiterbildung sieht vor, daß das Mittelrohr mit einer Gehäusehälfte verbunden ist. Durch diese einstückige Ausführung erleichtert sich der De- bzw.

Montageaufwand. Die Handhabung beim Aufbringen des Filtereinsatzes auf das Mittelrohr und das anschließende Einbringen in das Gehäuse vereinfacht sich, da keine Zentrierung des Filtereinsatzes mehr erforderlich ist.

Eine andere vorteilhafte Weiterentwicklung sieht vor, daß der Filtereinsatz lösbar mit dem Mittelrohr verbunden ist. Dies hat zum einen den Vorteil, daß bei der Entsorgung des verbrauchten Filtereinsatzes nur dieser ausgetauscht werden kann, was den Materialeinsatz auf der Ersatzteilseite reduziert. Auf der anderen Seite reduziert sich dadurch auch die zu entsorgende Menge an Material, es entsteht ein Ersatzteil, das z.B. metallfrei ist.

Eine weitere vorteilhafte Weiterbildung sieht vor, daß die dem Reinluftauslaß zugewandte Stirnseite des Filtereinsatzes mit einem Dichtwulst versehen ist, wobei der Dichtwulst auf der Oberfläche des Mittelrohres abdichtend anliegt und eine Radialdichtung bildet, Beim Einsetzen in das Gehäuse gelangt der Filtereinsatz durch die axialtolerante Dichtung am Mittelrohr automatisch in die richtige Einbauposition. Des weiteren ist diese biegeschlaffe Ausführung des Filtereinsatzes in der Lage, eventuell auftretende Druckstöße ohne Beschädigung auszugleichen.

In einer anderen vorteilhaften Weiterentwicklung ist vorgesehen, daß die dem Reinluftauslaß zugewandte Stirnseite des Filtereinsatzes mit einem Dichtwulst versehen ist, wobei der Dichtwulst auf der Stirnseite der Gehäusehälfte abdichtend anliegt und eine Axialdichtung bildet. Durch die spezielle Ausgestaltung der Dichtung, so, daß sie bei entsprechender Längenabstimmung des Filtereinsatzes axiale Dichteigenschaften übernehmen kann, ist garantiert, daß im Falle eines Druckstoßes die Filtereigenschaften erhalten bleiben

Eine andere vorteilhafte Weiterbildung sieht vor, daß der Filtereinsatz aus einem in Sternfaltung gefalteten Papier oder Vlies besteht und die Endscheiben sowie der Dichtwulst aus PUR-Schaum bestehen. Diese Materialkombination weist Vorzüge beim Auftreten von Druckstößen auf, in der Form, daß keine Beschädigungen am Filtereinsatz auftreten.

In einer vorteilhaften Weiterbildung ist vorgesehen, daß die nicht zum Filtereinsatz gehörigen Teile des Luftfilterelementes wiederverwendbar sind. Durch die Wiederverwendbarkeit der peripheren Teile steigt die Langlebigkeit des Produkts, die Menge an entstehendem Abfall wird so reduziert.

Eine weitere vorteilhafte-Weiterentwicklung sieht vor, daß die wiederverwendbaren Teile aus Metall und/oder Kunststoff bestehen. Dies hat den Vorteil, daß selbst im Falle der Rückführung dieser peripheren Teile in den Stoffkreislauf diese sortenrein erfolgt, beide Stoffe sind relativ leicht wiederzuverwenden.

Eine andere vorteilhafte Weiterbildung sieht vor, daß die der Reinluftseite abgewandte Stirnseite des Filtereinsatzes Toleranzlippen aufweist, mittels derer ein sicherer Sitz im Gehäuse garantiert wird. Die Toleranzlippe gestattet im Rahmen ihrer geometrischen Möglichkeiten einen gewissen axialen Ausgleich und sorgt für einen gewissen Anpressdruck der Stirnseite des Filtereinsatzes gegen das Mittelrohr.

In einer weiteren vorteilhaften Ausgestaltung existiert ein Luftfilter, das ein Luftfilterelement nach einem oder mehreren der vorgenannten Ansprüche enthält. In dieser Ausführungsform ist ein eingangs geschildertes Luftfilterelement mittels seines Reinluftauslasses gegen eine einen Reinluftauslaß enthaltende Dichtfläche des Luftfilters z. B. über einen Schnellspannhebel gepresst. Die hierbei auftretenden Längskräfte werden über das Gehäuse des Luftfilterelements aufgenommen. Eventuell auftretende Querkräfte nimmt das im Gehäuse befindliche Mittelrohr auf, so daß das Filterelement im Gehäuse des Luftfilterelements quasi kräftefrei montiert ist.

Ausführungsbeispiele der Erfindung sind in den Zeichnungen dargestellt und werden im folgenden näher erläutert. Die Zeichnungen zeigen:

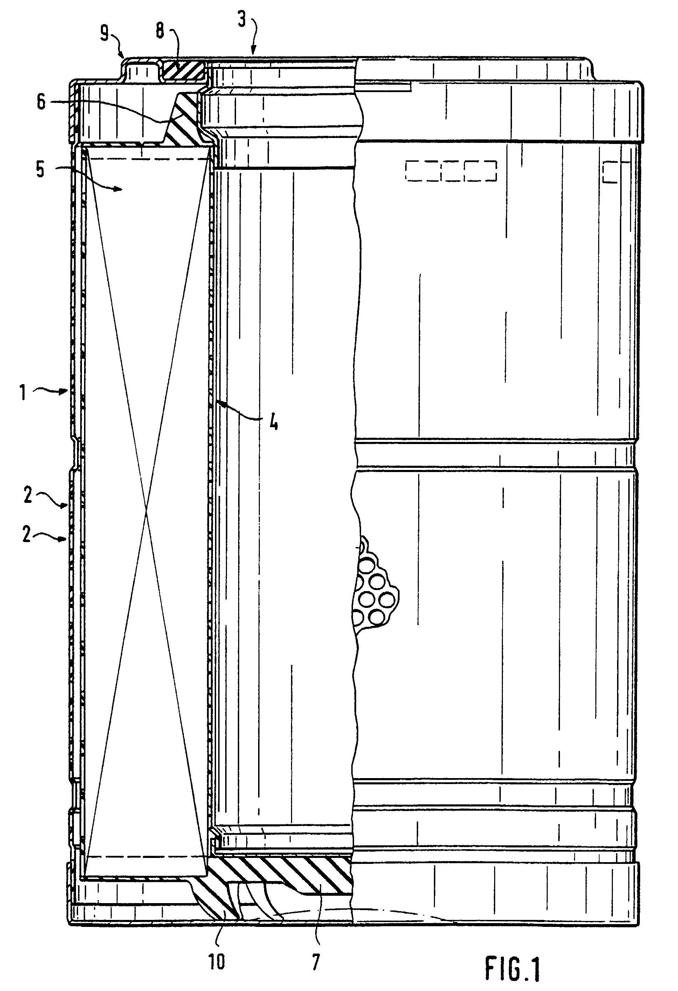

- Figur 1: ein Luftfilterelement,
- Figur 2: einen Trage- bzw. Montagegriff am Luftfilterelement,
- Figur 3: eine Wartungsintervalleinheit.

Das Luftfilterelement besteht aus einem Gehäuse 1, das wenigstens in zwei Teile teilbar ist. Das Gehäuse 1 ist luftdurchlässig, das durch zum Beispiel am Umfang aufgebrachte Löcher den Rohlufteinlaß 2 realisiert, Der Reinluftauslaß 3 ist in der Gehäusehälfte 9 integriert. Im Innern des Gehäuses 1 erstreckt sich ein ebenfalls luftdurchlässiges Mittelrohr 4, das mit dem Reinluftauslaß 3 verbunden ist. Diese Verbindung kann geklebt, geschweißt, geschraubt oder geschnappt sein.

Über das Mittelrohr 4 ist ein metallfreier Filtereinsatz 5 aus gefaltetem Papier gestülpt. Mittels PUR-Dichtungen an den Stirnseiten des Filtereinsatzes 5 trennt der Filtereinsatz die Reinluftvon der Rohluftseite. Auf der, der Reinluftseite abgewandten Stirnseite erstreckt sich eine PUR-Dichtung über die gesamte Stirnseitenfläche und dient neben dem Abdichten gleichzeitig der axialtoleranten Fixierung des Filtereinsatzes 5 im Gehäuse 1. In der Gehäusehälfte 9 befindet sich für den Dichtungskontakt mit dem Luftfilter eine Axialdichtung 8. Der Filtereinsatz 5, der lösbar auf dem Mittelrohr 4 sitzt, hat zur leichteren und sicheren De- bzw. Montage einen Griffschutz, vorzugsweise aus geschlitztem Kunststoff über seine äußere Oberfläche gestülpt. Im weniger robusten Einsatz kann dieser auch entfallen.

Zur leichteren De- bzw. Montage und einem sicheren und dichten Betrieb des Luftfilterelements verfügt Filterelement 5 über eine radial wirkende Dichtwulst 6, die in Verbindung mit Stirnseite 7 bzw. Toleranzlippen 10 dies garantieren.

In einer Ausführungsform sind die beiden Gehäusehälften miteinander verschraubt, denkbar ist allerdings auch eine Steck- bzw. Schnapp- oder Hakenverschlußverbindung. Wie in Figur 2 dargestellt ist ein Griff am Luftfilterelement befestigt, mittels diesem das Luftfilterelement leichter handhabbar wird, insbesondere beim Einsetzen in das Luftfilter, wobei das Luftfilterelement solange gegen die einen Reinluftauslaß enthaltende Dichtfläche des Luftfilters mittels des Griffs gehalten wird, bis das Gehäuse des Luftfilterelements z. B.von einem nicht dargestellten Schnellspannhebel fixiert wird.

In einem Ausführungsbeispiel ist wie in Figur 3 zu sehen ein Wartungsanzeiger dargestellt, anhand dessen die Wartungsintervalle z. B.über ein dort abzulesendes Herstellungs- bzw. Verkaufsdatum abgelesen werden können. Anhand einsatzspezifischer Staubbeladungen in Abhängigkeit der Betreiebszeit ist so eine Vorhersage über die mögliche Staubbeladung in Abhängigkeit der Verweildauer des Filterelements im Luftfilter möglich.

In einer alternativen Ausgestaltung ist das Luftfilterelement mit einem Rastelement, welches zur formschlüssigen Verbindung der Gehäusehälften geeignet ist und mit dem Deckel oder dem Gehäuse über ein Filmscharnier oder ein Biegescharnier verbunden ist, versehen. In einer weiteren alternativen Ausgestaltung befindet sich innerhalb des Mittelrohres eine Sicherheitspatrone, die zusätzlich angeordnet ist, um Verschmutzungen während des Wechsels des Filtereinsatzes zu vermeiden, deren dem Reinluftauslaß gegenüberliegenden Stirnseite geschlossen ist und die mit dem Mittelrohr lösbar verbunden ist. Am Umfang des Filtereinsatzes ist zur Vermeidung von Beschädigungen ein Griffschutz angebracht bzw. übergestreift, der z. B. aus geschlitzter Kunststoffolie bestehen kann.

## Patentansprüche

1. Luftfilterelement, insbesondere für die Reinigung von Verbrennungsluft von Verbrennungskraftmaschinen in Luftfiltern mit einem im wesentlichen zylindrischen, luftdurchlässigen Gehäuse (1), wobei
- das Luftfilterelement einen Rohlufteinlaß (2) und einen Reinluftauslaß (3) aufweist,
- der Reinluftauslaß (3) im wesentlichen konzentrisch an einer der Stirnseiten des zylinderförmigen Gehäuses (1) angeordnet ist und der Rohlufteinlaß im wesentlichen über die Mantelfläche des Gehäuses (1) erfolgt,
- sich im Inneren des Gehäuses (1) ein luftdurchlässiges Mittelrohr (4) , welches mit dem Reinluftauslaß kommuniziert, erstreckt,
- über das Mittelrohr (4) ein im wesentlichen metallfreier Filtereinsatz (5) geschoben ist, der die Reinluft- von der Rohluftseite trennt,
- die Reinluftauslaßseite des Gehäuses (1) stirnseitig eine Axialdichtung (8) aufweist,
- das Gehäuse (1) teilbar ist,
- die dem Reinluftauslaß gegenüberliegende Stirnseite (7) verschlossen ist
dadurch gekennzeichnet, daß die dem Reinluftauslaß gegenüberliegende Stirnseite (7) Toleranzlippen (10) aufweist.

2. Luftfilterelement nach Anspruch 1, dadurch gekennzeichnet, daß das Mittelrohr (4) mit einer Gehäusehälfte (9) verbunden ist.

3. Luftfilterelement nach einem der vorgenannten Ansprüche, dadurch gekennzeichnet, daß der Filtereinsatz (5) lösbar mit dem Mittelrohr (4) verbunden ist.

4. Luftfilterelement nach einem der vorgenannten Ansprüche, dadurch gekennzeichnet, daß die dem Reinluftauslaß zugewandte Stirnseite des Filtereinsatzes (5) mit einem Dichtwulst (6) versehen ist, wobei der Dichtwulst (6) auf der Oberfläche des Mittelrohres (4) abdichtend anliegt und eine Radialdichtung bildet.

5. Luftfilterelement nach einem der vorgenannten Ansprüche, dadurch gekennzeichnet, daß die dem Reinluftauslaß zugewandte Stirnseite des Filtereinsatzes (5) mit einem Dichtwulst versehen ist, wobei der Dichtwulst auf der Stirnseite der Gehäusehälfte (9) abdichtend anliegt und eine Axialdichtung bildet.

6. Lufifilterelement nach einem der vorherigen Ansprüche, dadurch gekennzeichnet, daß der Filtereinsatz aus einem in Sternfaltung gefalteten Papier oder Vlies besteht und die Endscheiben sowie der Dichtwulst aus PUR-Schaum bestehen.

7. Luftfilterelement nach einem der vorgenannten Ansprüche, dadurch gekennzeichnet, daß die nicht zum Filtereinsatz (5) gehörigen Teile des Luftfilterelementes wiederverwendbar sind.

8. Luftfilterelement nach Anspruch 7, dadurch gekennzeichnet, daß die wiederverwendbaren Teile aus Metall und/oder Kunststoff bestehen.

9. Luftfilter, ein Lufifilterelement nach einem der vorgenannten Ansprüche enthaltend.

## Claims

1. Air filter element, more especially for filtering combustion air of internal combustion engines, in air filters having a substantially cylindrical, air-permeable housing (1),
- the air filter element having an unfiltered air inlet (2) and a filtered air outlet (3),
- the filtered air outlet (3) being disposed substantially concentrically on one of the end faces of the cylindrical housing (1), and the intake of unfiltered air being effected substantially via the surface of the housing (1),
- an air-permeable central tube (4), which communicates with the filtered air outlet, extending in the interior of the housing (1),
- a substantially metal-free filter insert (5), which separates the filtered air side from the unfiltered air side, being slipped over the central tube (4),
- the filtered air outlet side of the housing (1) having an axial seal (8) on its end face,
- the housing (1) being dividable, and
- the end face (7), situated opposite the filtered air outlet, being closed,
characterised in that the end face (7), situated opposite the filtered air outlet, has tolerance lips (10).

2. Air filter element according to claim 1, characterised in that the central tube (4) is connected to one housing half (9).

3. Air filter element according to one of the above-mentioned claims, characterised in that the filter insert (5) is detachably connected to the central tube (4).

4. Air filter element according to one of the above-mentioned claims, characterised in that the end face of the filter insert (5) facing the filtered air outlet is provided with a sealing bead (6), the sealing bead (6) abutting sealingly against the upper face of the central tube (4) and forming a radial seal.

5. Air filter element according to one of the above-mentioned claims, characterised in that the end face of the filter insert (5) facing the filtered air outlet is provided with a sealing bead, the sealing bead abutting sealingly against the end face of the housing half (9) and forming an axial seal.

6. Air filter element according to one of the previous claims, characterised in that the filter insert is formed from a paper or non-woven fabric folded in a radial manner, and the end discs as well as the sealing bead are formed from expanded polyurethane.

7. Air filter element according to one of the above-mentioned claims, characterised in that the parts of the air filter element not belonging to the filter insert (5) are re-usable.

8. Air filter element according to claim 7, characterised in that the re-usable parts are formed from metal and/or plastics material.

9. Air filter, containing an air filter element according to one of the above-mentioned claims.

## Revendications

1. Elément de filtre à air, en particulier pour le nettoyage d'air de combustion destiné à des moteurs à combustion interne, dans des filtres à air, avec un boîtier (1) perméable à l'air, sensiblement cylindrique, où
- l'élément de filtre à air présente une entrée d'air brute (2) et une évacuation d'air pur (3),
- l'évacuation d'air pur (3) est disposée sensiblement concentriquement sur l'une des faces frontales du boîtier (1) de forme cylindrique, et l'entrée d'air brute s'effectue sensiblement sur la surface enveloppe du boîtier (1),
- un tube central (4) perméable à l'air, communiquant avec une évacuation d'air pur, s'étend à l'intérieur du boîtier (1),
- une garniture de filtre (5), pratiquement exempte de métal, assurant la séparation entre le côté d'air pur et le côté d'air brut, est enfilée sur le tube central (4),
- le côté évacuation d'air pur du boîtier (1) présente frontalement un joint d'étanchéité axial (8),
- le boîtier (1) est divisible,
- la face frontale (7) opposée à l'évacuation d'air pur est fermée,
caractérisé en ce que
la face frontale (7) opposée à l'évacuation d'air pur présente des lèvres de tolérance (10).

2. Elément de filtre à air selon la revendication 1,
caractérisé en ce que
le tube central (4) est relié à un demi-boîtier (9).

3. Elément de filtre à air selon l'une des revendications précédentes,
caractérisé en ce que
la garniture de filtre (5) est reliée de façon désolidarisable au tube central (4).

4. Elément de filtre à air selon l'une des revendications précédentes,
caractérisé en ce que
la face frontale, tournée vers l'évacuation d'air pur, de la garniture de filtre à air (5) est dotée d'un bourrelet d'étanchéité (6), le bourrelet d'étanchéité (6) appuyant avec effet d'étanchéité sur la surface du tube central (4) et constituant un joint d'étanchéité radial.

5. Elément de filtre à air selon l'une des revendications précédentes,
caractérisé en ce que
la face frontale, tournée vers l'évacuation d'air pur, de la garniture de filtre (5) est dotée d'un bourrelet d'étanchéité, le bourrelet d'étanchéité appuyant avec effet d'étanchéité sur la face frontale du demi-boîtier (9) et constituant un joint d'étanchéité axial.

6. Elément de filtre à air selon l'une des revendications précédentes,
caractérisé en ce que
la garniture de filtre est constituée de papier ou de matelas de fibres, plié en étoile, et les disques d'extrémité ainsi que le bourrelet d'étanchéité sont constitués d'une mousse de PUR.

7. Elément de filtre à air selon l'une des revendications précédentes,
caractérisé en ce que
les parties, n'appartenant pas à la garniture de filtre (5), de l'élément de filtre à air sont réutilisables.

8. Elément de filtre à air selon la revendication 7,
caractérisé en ce que
les parties réutilisables sont en métal et/ou en matière plastique.

9. Filtre à air, contenant un élément de filtre à air selon l'une des revendications précédentes.
